# EUROPEAN PATENT APPLICATION

(11) **EP 4 235 019 A1**
(43) Date of publication of application: **30.08.2023**
(21) Application number: 23158479.8
(22) Date of filing: 24.02.2023
(51) Int. Cl.: F21S 41/143, F21S 41/153, F21S 41/155, F21S 41/255, F21S 41/265, B60Q 1/20, F21S 41/663, F21S 41/151, B60Q 1/00, B62J 6/022

(54) **INTEGRATED VEHICLE LAMP AND LENS MODULE**

(30) Priority: 25.02.2022 CN 202210174864
(71) Applicant: Brightstar Technology Co., Ltd., New Taipei City 25147 (TW)
(72) Inventor: LIN, MING-HUI, New Taipei City (TW)
(74) Representative: Bandpay & Greuter

(57) **Abstract**

A lens module with a diameter less than 200 millimeters is disclosed, including a first lens, a second lens and a third lens. The first lens has a refractive index ranging from 1.4 to 1.6 and an average curvature ranging from 1/36 (mm)⁻¹ to 1/43 (mm)⁻¹. The first lens has a light-emitting angle within 70 degrees in the horizontal direction and within 5 degrees in the vertical direction. The first lens in the short axis direction is less than 50 mm and its protruding height on the light-emitting surface is less than 20 mm. The second lens has a light-emitting angle within 40 degrees in the horizontal direction and within 5 degrees in the vertical direction. The third lens has a light-emitting angle within 26 degrees in the horizontal direction and within 2 degrees in the vertical direction.

## Description

### CROSS-REFERENCE TO RELATED APPLICATION

This application claims the priority benefits of China patent application serial no. 202210174864.X filed on February 25, 2022. The entirety of the mentioned above patent application is hereby incorporated by reference herein and made a part of this specification.

### BACKGROUND OF THE INVENTION

### 1. Field of the Invention

The present invention relates to a lamp. Particularly, the present invention relates to an integrated vehicle lamp.

### 2. Description of the prior art

There are many lamp products combining the high beam and the low beam on the market, but no such product that combines an integrated fog lamp can be found. The configuration of the fog lamp usually needs to occupy an extra space.

Moreover, when the high beam, low beam and fog lamp are combined together, it must also consider complying with the standard light specifications, such as the Economic Commission for Europe (ECE), the U.S Federal Motor Vehicle Safety Standards (FMVSS) and the U.S Society of Automotive Engineers International (SAE International) for the specifications of vehicle lamp (such as SAE J583 and FMVSS108), for example, class D or class F3 vehicle lamp specifications of ECE R149 (corresponding to R113 and R19 of the old regulations). If the original high beam, low beam and fog lamp are directly placed in a limited space, the technical problems such as poor optical efficiency and glare, etc. may be generated, which will affect the safety of other vehicles on the road.

### SUMMARY OF THE INVENTION

### Technical means to solve the technical problem

It can be understood from the above descriptions, the technical problems to be solved are how to integrate the high beam, low beam and fog lights into the same lamp with a limited space, and make it possible to comply with the relevant laws and regulations of vehicle lamp.

In order to solve the above technical problems, an embodiment of the present invention provides a lens module comprising a first lens, a second lens and a third lens. The first lens has a refractive index ranging from 1.4 to 1.6 and an average curvature of a light exit surface of the first lens is between 1/36 reciprocal millimeter ((mm)⁻¹) and 1/43 (mm)⁻¹. When the first lens receives an incident light emitted by a first light source with a light exit angle within 120 degrees, the first lens has a light exit angle within 70 degrees in a horizontal direction on the light exit surface, and the first lens has a light exit angle within 5 degrees in a vertical direction on the light exit surface. A size of the first lens is not greater than 50 millimeters (mm) in a minor axis direction, and a protruding height of the light exit surface of the first lens is not greater than 20 mm. When the second lens receives an incident light emitted by a second light source, the second lens has a light exit angle within 40 degrees in a horizontal direction on a light exit surface, and the second lens has an exit angle within 5 degrees in a vertical direction on the light exit surface. When the third lens receives an incident light emitted by a third light source, the third lens has a light exit angle within 26 degrees in a horizontal direction on a light exit surface, and the third lens has a light exit angle within 2 degrees in a vertical direction on the light exit surface. Wherein the first lens, the second lens and the third lens are arranged vertically in a straight line in sequence, and there is a first distance between a bottom end of the first lens and a top end of the third lens, and the first distance is not greater than 200 mm.

The present invention also provides an integrated vehicle lamp comprising the above lens module and a substrate disposed on a light incident side of the lens module, and the substrate is provided with the first light source, the second light source and the third light source. A light emitted from the first light source is substantially incident on the first lens, and a light emitted from the second light source is substantially incident on the second lens and a light emitted from the third light source is substantially incident on the third lens.

### The technical effects contrasting to prior art

According to the integrated vehicle lamp provided by an embodiment of the present invention, it can integrate a fog lamp, a low beam and a high beam into a lamp with a diameter less than 200 mm, and the fog lamp complies with the vehicle lamp specifications of the class F3 of ECE R149 (or R19 of old regulation), and it make the low beam and the high beam comply with the specifications of the class D of ECE R149 (or R113 of old regulation). Therefore, it allows the vehicle for a more flexible space configuration when it configures lamp, and the fog lamp does not need to be separately configured from the low beam and high beam, which can reduce power consumption.

### BRIEF DESCRIPTION OF THE DRAWINGS

In order to make the above-mentioned and other purposes, features, advantages and embodiments of the present invention more clearly understood, the accompanying drawings are described as follows:
FIG. 1A is an exploded drawing of an integrated vehicle lamp according to an embodiment of the present invention.
FIG. 1B is schematic assembly drawing of an integrated vehicle lamp according to an embodiment of the present invention.
FIG. 2A is a schematic top view of the first lens of the fog lamp of the integrated vehicle lamp according to an embodiment of the present invention.
FIG. 2B is a schematic side view of the first lens of the fog lamp of the integrated vehicle lamp according to an embodiment of the present invention.
FIG. 2C is a schematic top view of the second lens of the low beam of the integrated vehicle lamp according to an embodiment of the present invention.
FIG. 2D is a schematic side view of the second lens of the low beam of the integrated vehicle lamp according to an embodiment of the present invention.
FIG. 2E is a schematic top view of the third lens of the high beam of the integrated vehicle lamp according to an embodiment of the present invention.
FIG. 2F is a schematic side view of the third lens of the high beam of the integrated vehicle lamp according to an embodiment of the present invention.
FIG. 3A is a schematic top view of an optical path of the fog lamp of the integrated vehicle lamp according to an embodiment of the present invention.
FIG. 3B is a schematic side view of the optical path of the fog lamp of the integrated vehicle lamp according to an embodiment of the present invention.
FIG. 3C is a schematic top view of an optical path of the low beam of the integrated vehicle lamp according to an embodiment of the present invention.
FIG. 3D is a schematic side view of the optical path of the low beam of the integrated vehicle lamp according to an embodiment of the present invention.
FIG. 3E is a schematic top view of an optical path of the high beam of the integrated vehicle lamp according to an embodiment of the present invention.
FIG. 3F is a schematic side view of the optical path of the high beam of the integrated vehicle lamp according to an embodiment of the present invention.
FIG. 4A is a schematic diagram of the inspection specifications of the Economic Commission for Europe on a fog lamp of a vehicle.
FIG. 4B is a specification sheet of the Economic Commission for Europe on a fog lamp of a vehicle (class F3 of the ECE R149 (or R19 of the old regulation)).
FIG. 5A is a schematic diagram of the inspection specifications of the Economic Commission for Europe on a low beam of a vehicle.
FIG. 5B is a specification sheet of the Economic Commission for Europe on a low beam of a vehicle (class D of the ECE R149 (or R113 of the old regulation)).
FIG. 6A is a schematic diagram of the inspection specifications of the Economic Commission for Europe on a high beam of a vehicle.
FIG. 6B is a specification sheet of the Economic Commission for Europe on a high beam of a vehicle (class D of the ECE R149 (or R19 of the old regulation)).
FIG. 7A is a schematic diagram of the inspection specifications of the U.S Society of Automotive Engineers International on a fog lamp.
FIG. 7B is a specification sheet of the U.S Society of Automotive Engineers International on a fog lamp (SAE J583).
FIG. 8A is a schematic diagram of the inspection specifications of the U.S Federal Motor Vehicle Safety Standards on a low beam.
FIG. 8B is a specification sheet of the U.S Federal Motor Vehicle Safety Standards on a low beam (FMVSS 108).
FIG. 9A is a schematic diagram of the inspection specifications of the U.S Federal Motor Vehicle Safety Standards on a high beam.
FIG. 9B is a specification sheet of the U.S Federal Motor Vehicle Safety Standards on a high beam (FMVSS 108).

### DETAILED DESCRIPTION OF THE PREFERRED EMBODIMENT

The following will clearly illustrate the spirit of the embodiments of the present invention with drawings and detailed descriptions. After a person having ordinary skill in the art who understands the embodiments of the present invention can change and modify the technology from the technology taught by the disclosure without departing from the spirit and scope of the disclosure.

As used herein, "comprising", "including", "having", "containing", etc., is an open term, which means including but not limited thereto.

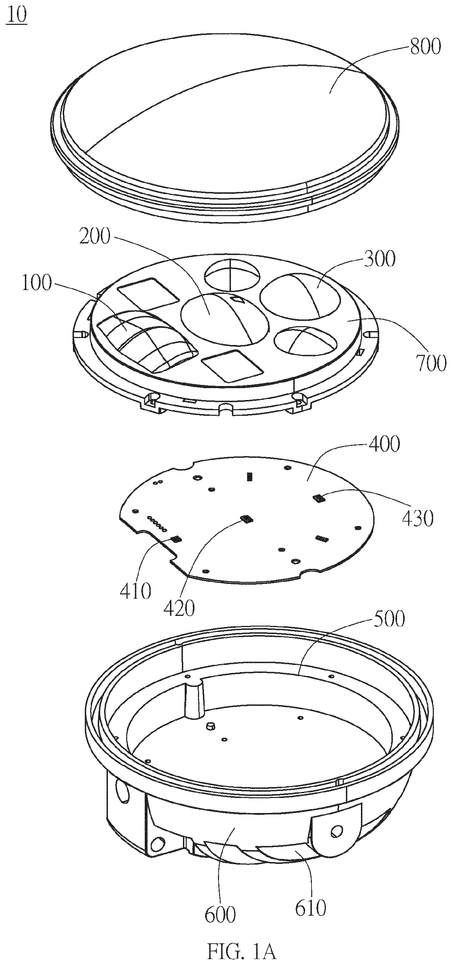

Referring to FIG. 1A, an exploded drawing of an integrated vehicle lamp according to an embodiment of the present invention is illustrated. As shown in the FIG. 1A, the integrated vehicle lamp 10 includes a fog lamp 100, a low beam 200 and a high beam 300. The integrated vehicle lamp 10 of an embodiment of the present invention can be applied to various vehicles, such as automobiles or motorbikes, etc., but it is not limited thereto. The configuration of the integrated vehicle lamp 10, for example, may be that the fog lamp 100 is located closest to the ground surface, the low beam 200 is next, and the high beam 300 is located at the top of the three.

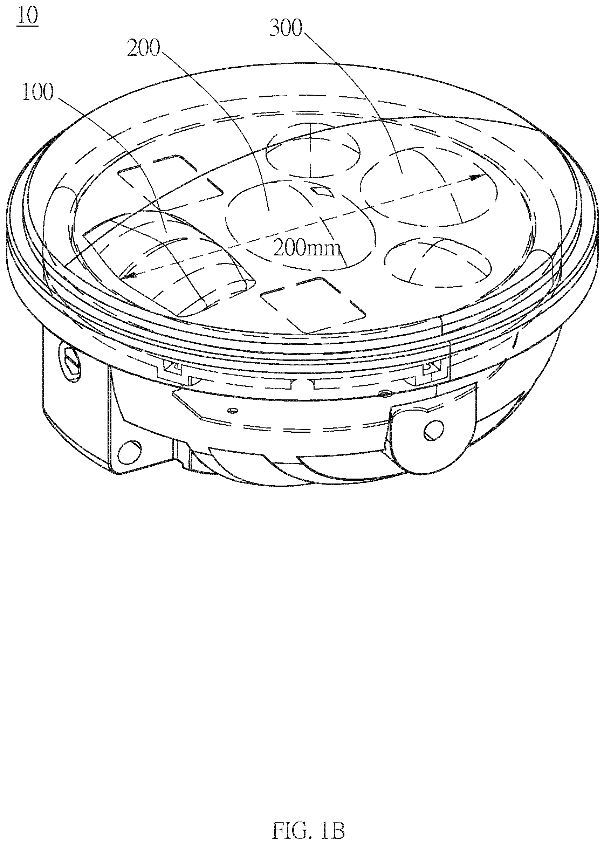

Next, referring to FIG. 1B, a schematic assembly drawing of an integrated vehicle lamp according to an embodiment of the present invention is illustrated. As shown to FIG. 1B, in addition to the above components, the integrated vehicle lamp 10 may have a lens module 700 as shown in FIG. 1A to fix the respective lenses of the fog lamp 100, the low beam 200 and the high beam 300. The integrated vehicle lamp 10 can also have a substrate 400 for disposing light sources (such as a first light source 410, a second light source 420, and a third light source 430), and a fixed base 500 for carrying the substrate 400, and a lampshade 800 above the lens module can be used to protect the lens module 700 from external collisions. The appearance of the above components is shown in FIG. 1B after assembling. It should be noted that the internal components such as the fog lamp 100, the low beam 200, the high beam 300 and the substrate 400 are drawn with dotted lines, and the labelling of the internal components are omitted in order to represent the appearance of the integrated vehicle lamp 10 after assembling.

It should be noted that although the terms "first", "second", "third" and the like may be used herein to describe various elements, components, regions, layers and/or sections, these elements, components, regions, layers and/or sections shall not be limited by these terms. These terms are only used to distinguish one element, component, region, layer and/or section from another element, component, region, layer and/or section. Therefore, a "first element", "component", "region", "layer" and/or "section" discussed below could be termed a second element, component, region, layer, and/or section without departing from the teachings herein.

The relevant structures of the fog lamp 100, the low beam 200 and the high beam 300 are described below.

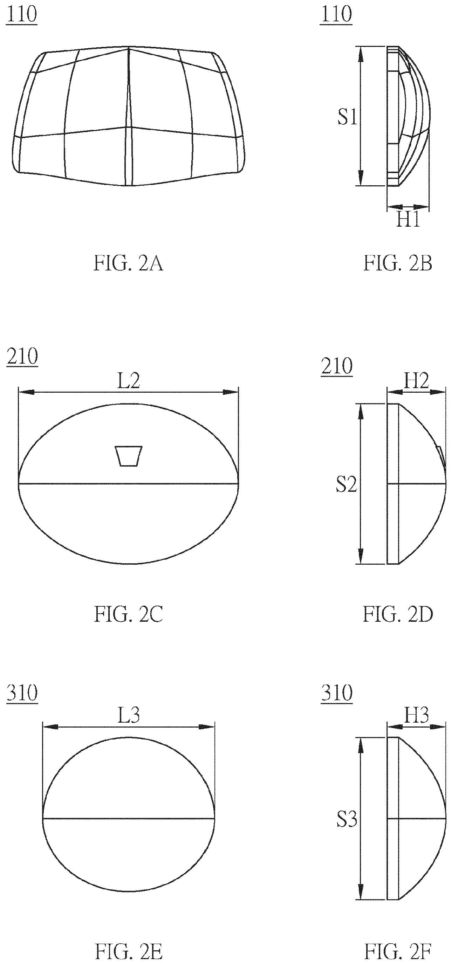

Referring to FIG. 2A and FIG. 2B, FIG. 2A is a schematic top view of the first lens of the fog lamp of the integrated vehicle lamp according to an embodiment of the present invention, and FIG. 2B is a schematic side view of the first lens of the fog lamp of the integrated vehicle lamp according to an embodiment of the present invention. The fog lamp 100 of the FIG. 1A includes a first lens 110 of the FIG. 2A, a refractive index of the first lens 110 is preferably between 1.4 and 1.6, and an average curvature of a light exit surface of the first lens 110 is preferably between 1/36 reciprocal millimeter ((mm)⁻¹) and 1/43 (mm)⁻¹. A size of the first lens 110 is not greater than 50 millimeters (mm) in a minor axis direction S1, and a protruding height H1 of the light exit surface of the first lens 110 is not greater than 20 mm, as shown in FIG. 2B.

Referring to FIG. 2C and FIG. 2D, FIG. 2C is a schematic top view of the second lens of the low beam of the integrated vehicle lamp according to an embodiment of the present invention, and FIG. 2D is a schematic side view of the second lens of the low beam of the integrated vehicle lamp according to an embodiment of the present invention. The low beam 200 of the FIG. 1A includes a second lens 210 of the FIG. 2C, a refractive index of the second lens 210 is preferably between 1.4 and 1.6, and an average curvature of a light exit surface of the second lens 210 is preferably between 1/50 (mm)⁻¹ and 1/57 (mm)⁻¹. A size of the second lens 210 is preferably not greater than 60 mm in a major axis direction L2, and a size of the second lens 210 is preferably not greater than 50 mm in a minus axis direction S2, and a protruding height H2 of the light exit surface of the second lens 210 is preferably not greater than 20 mm, as shown in FIG. 2D.

Referring to FIG. 2E and FIG. 2F, FIG. 2E is a schematic top view of the third lens of the high beam of the integrated vehicle lamp according to an embodiment of the present invention, and FIG. 2F is a schematic side view of the third lens of the high beam of the integrated vehicle lamp according to an embodiment of the present invention. The high beam 300 of the FIG. 1A includes a third lens 310 of the FIG. 2E, a refractive index of the third lens 310 is preferably between 1.4 and 1.6, and an average curvature of a light exit surface of the third lens 310 is preferably between 1/43 (mm)⁻¹ and 1/50 (mm)⁻¹. A size of the third lens 310 is preferably not greater than 50 mm in a major axis direction L3, and a size of the third lens 310 is preferably not greater than 50 mm in a minus axis direction S3, and a protruding height H3 of the light exit surface of the third lens 310 is preferably not greater than 20 mm, as shown in FIG. 2F.

Based on the dimensions of the above lenses, the integrated vehicle lamp 10 provided by an embodiment of the present invention, the first lens 110 included in the fog lamp 100, the second lens 210 included in the low beam 200 and the third lens 310 included in the high beam 300 are arranged vertically in sequence. A distance, for example, to be called a first distance is allowed between the bottom end of the first lens 110 to the top of the third lens 310, and the first distance is not greater than 200 mm, as shown in FIG. 1B.

Moreover, a ratio of the size of the first lens 110 in the minor axis direction S1 to the first distance is preferably between 15% and 20%, and a ratio of the protruding height H1 of the first lens 110 on the light exit surface to the first distance is preferably between 5% and 10%. A ratio of the size of the second lens 210 in the major axis direction L2 to the first distance is preferably 20% to 30%, and a ratio of the size of the second lens 210 in the minor axis direction S2 to the first distance is preferably 15% to 25%, and a ratio of the protruding height H2 of the second lens 210 on the light exit surface to the first distance is preferably between 5% and 10%. A ratio of the size of the third lens 310 in the major axis direction L3 to the first distance is preferably between 15% and 25%, and a ratio of the size of the third lens 310 in the minor axis direction S3 to the first distance is preferably between 15% and 25%, and a ratio of the protruding height H3 of the third lens 310 on the light exit surface to the first distance is preferably between 5% and 10%.

It can be understood from the above description, the integrated vehicle lamp 10 provided by an embodiment of the present invention integrates the first lens 110 included in the fog lamp 100, the second lens 210 included in the low beam 200 and the third lens 310 included in the high beam 300 are integrated into the same lamp. Since the fog lamp 100, the low beam 200 and the high beam 300 are arranged in sequence along the vertical direction, the total size of the three is related to the total size in the minor axis direction (That is, the sum of the lengths of the minor axis directions S1, S2 and S3 of the three). Therefore, the diameter of the integrated vehicle lamp 10 may not be greater than 200 mm, and the fog lamp 100, the low beam 200 and the high beam 300 can be arranged in a small space at the same time.

Next, the optical characteristics of the fog lamp 100, the low beam 200, and the high beam 300 will be described.

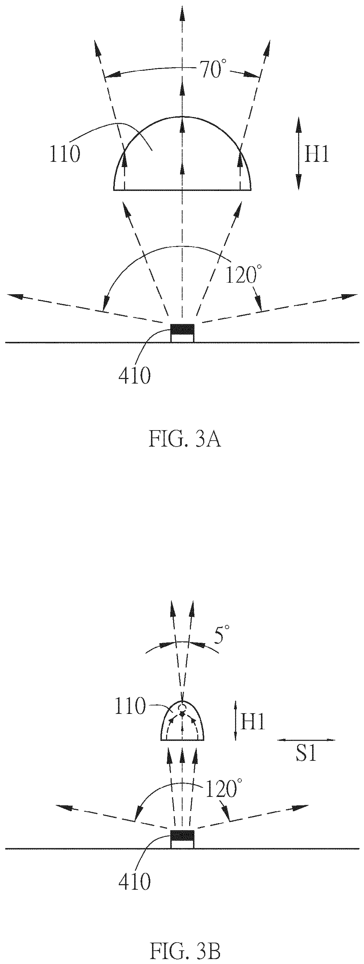

Referring to FIG. 3A and FIG. 3B, FIG. 3A is a schematic top view of an optical path of the fog lamp of the integrated vehicle lamp according to an embodiment of the present invention, and FIG. 3B is a schematic side view of the optical path of the fog lamp of the integrated vehicle lamp according to an embodiment of the present invention. As shown in FIG. 3A, when the substrate 400 is disposed at an appropriate distance from the lens module 700, for example, the appropriate distance is not greater than 30 mm, a ratio of the distance between the substrate 400 and the lens module 700 to the first distance is preferably between 8% to 13%. When the first light source 410 (for example, it can be various light emitting diodes,) on the substrate 400 emits the light with a light exit angle within 120 degrees to the first lens 110 of the fog light 100 (that is, the first light source 410 emits the light along the direction H1 to the first lens 110), it may cause an exit angle of the light in the horizontal direction is concentrated within 70 degrees relative to the first light source 410 as the light exits from the light exit surface (that is, the curved surface away from the first light source 410) of the first lens 110 due to the above-described structural characteristics of the first lens 110 such as the size, the refractive index and the curvature, as shown in FIG. 3A. Moreover, when the light is emitted from the light exit surface of the first lens 110, the angle of the light in the vertical direction (that is, along the direction of S1) will be concentrated within 5 degrees relative to the first light source 410, as shown in FIG. 3B.

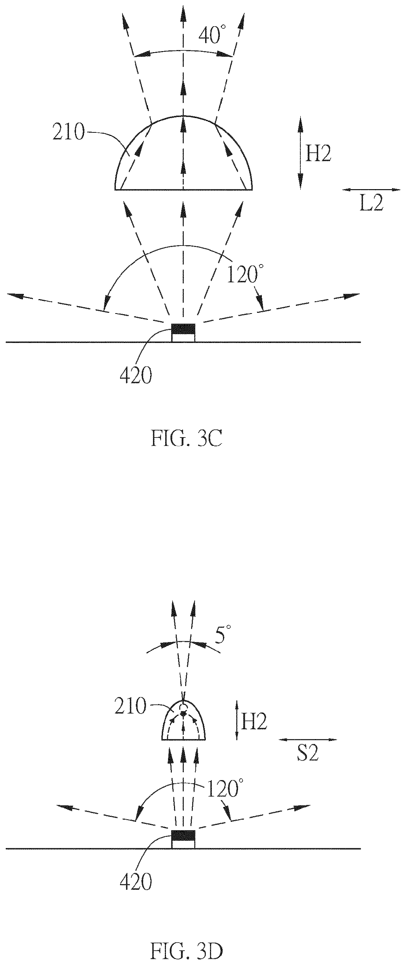

Next, referring to FIG. 3C and FIG. 3D, FIG. 3C is a schematic top view of an optical path of the low beam of the integrated vehicle lamp according to an embodiment of the present invention, and FIG. 3D is a schematic side view of the optical path of the low beam of the integrated vehicle lamp according to an embodiment of the present invention. As shown in FIG. 3C, when the second light source 420 (for example, it can be various light emitting diodes,) on the substrate 400 emits the light with a light exit angle within 120 degrees to the second lens 210 of the low beam 200 (that is, the second light source 420 emits the light along the direction H2 to the second lens 210), it may cause an exit angle of the light in the horizontal direction (that is, along the direction L2) is concentrated within 40 degrees relative to the second light source 420 as the light exits from the light exit surface (that is, the curved surface away from the second light source 420) of the second lens 210 due to the above-described structural characteristics of the second lens 210 such as the size, the refractive index and the curvature, as shown in FIG. 3C. Moreover, when the light is emitted from the light exit surface of the second lens 210, the angle of the light in the vertical direction (that is, along the direction of S2) will be concentrated within 5 degrees relative to the second light source 420, as shown in FIG. 3D.

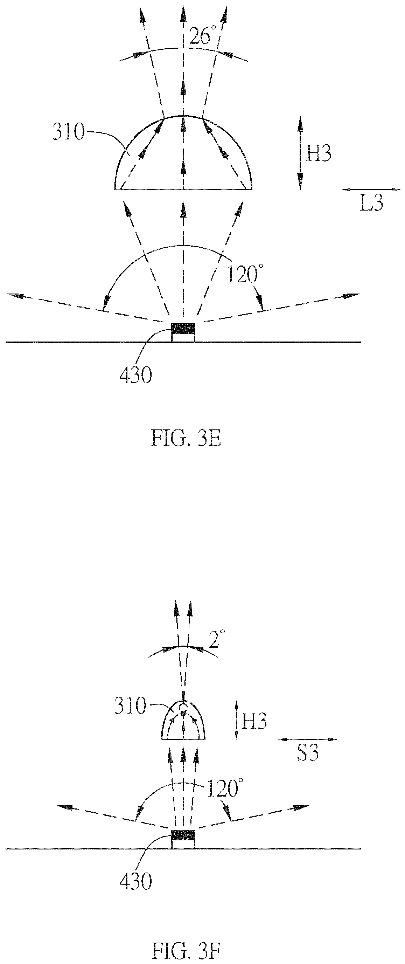

Next, referring to FIG. 3E and FIG. 3F, FIG. 3E is a schematic top view of an optical path of the high beam of the integrated vehicle lamp according to an embodiment of the present invention, and FIG. 3F is a schematic side view of the optical path of the high beam of the integrated vehicle lamp according to an embodiment of the present invention. As shown in FIG. 3E, when the third light source 430 (for example, it can be various light emitting diodes,) on the substrate 400 emits the light with a light exit angle within 120 degrees to the third lens 310 of the high beam 300 (that is, the third light source 430 emits the light along the direction H3 to the third lens 310), it may cause an exit angle of the light in the horizontal direction (that is, along the direction L3) is concentrated within 26 degrees relative to the third light source 430 as the light exits from the light exit surface (that is, the curved surface away from the third light source 430) of the third lens 310 due to the above-described structural characteristics of the third lens 310 such as the size, the refractive index and the curvature, as shown in FIG. 3E. Moreover, when the light is emitted from the light exit surface of the third lens 310, the angle of the light in the vertical direction (that is, along the direction of S3) will be concentrated within 2 degrees relative to the third light source 430, as shown in FIG. 3F.

The integrated vehicle lamp 10 provided by an embodiment of the present invention, not only conforms to the above optical characteristics in terms of light patterns, but also complies with the specific specifications in terms of brightness. For example, the luminous intensity of the fog lamp 100 complies the Economic Commission for Europe (ECE) for the vehicle lamp specification, that is, the inspection specifications of the class F3 of ECE R149 (or R19 of the old regulations) for the fog lamp.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the disclosure, and will not be interpreted in an idealized or overly formal sense unless expressly so defined herein.

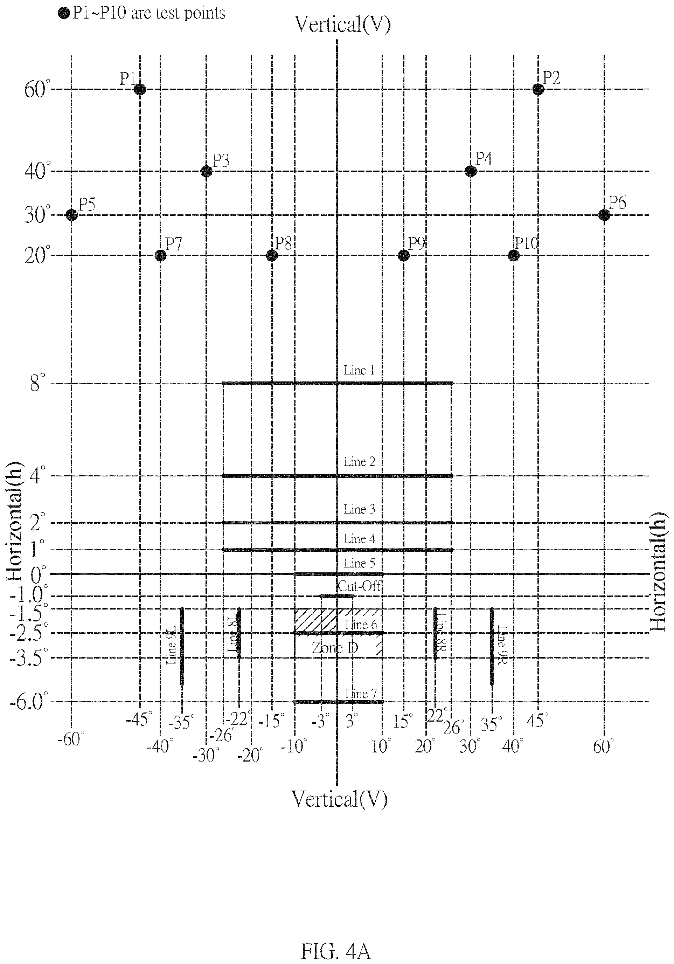

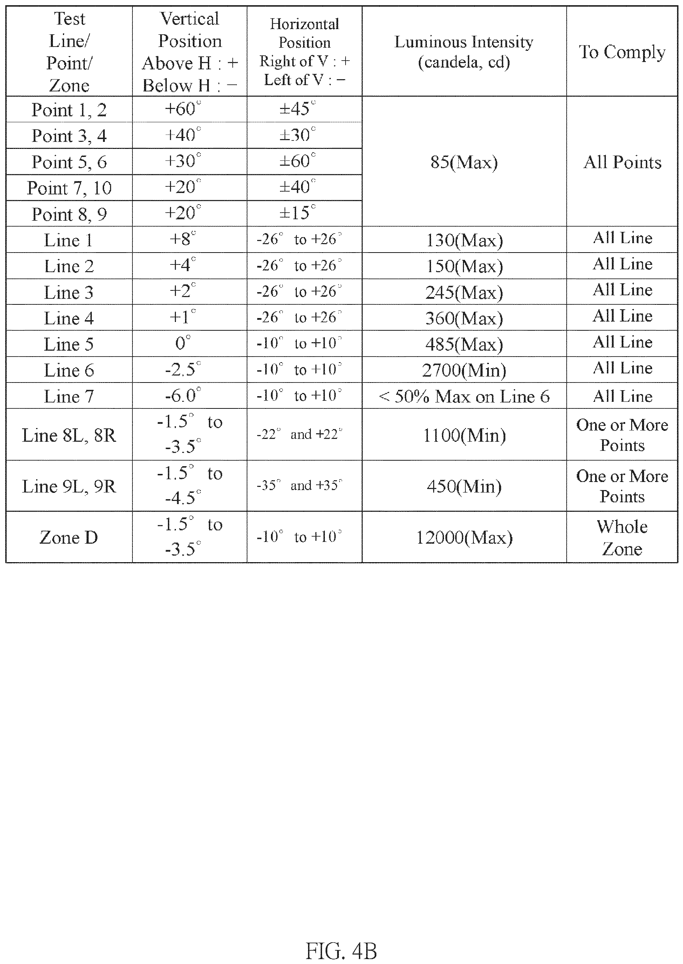

Referring to FIG. 4A and FIG. 4B, FIG. 4A is a schematic diagram of the inspection specifications of the Economic Commission for Europe on a fog lamp of a vehicle, and FIG. 4B is a specification sheet of the Economic Commission for Europe on a fog lamp of a vehicle (class F3 of the ECE R149 (or R19 of the old regulation)). As shown in FIG. 4A, the inspection of the fog lamp 100 can inspect its corresponding luminous intensity at 25 meters in front of the fog lamp 100, and the unit of luminous intensity is candela (cd), that is, the luminous flux emitted per unit solid angle in a given direction of a light source. In FIG. 4A, the inspection includes test points 1 to 10, test lines 1 to 9 and test zone D, and the test lines 8 and 9 respectively include two test lines on left and right (in other words, test line 8 left, test line 8 right, test line 9 left and test line 9 right).

It should be noted that, in order to clearly express each test point, test line and test zone, the horizontal angle scale and the vertical angle scale in FIG. 4A are not drawn in the same scale. In FIG. 4B, ECE R149 (or R19 of the old regulations) has the specifications to test points 1 to 10 and test lines 1 to 5 that no light is expected to be sensed in principle, if the light is sensed, the sensed value can't exceed the respective maximum allowable value. For example, the column 4 of the specification sheet indicates that the maximum luminous intensity of test points 1 to 10 must not exceed 85 cd, and all test points must comply with the specification. For the horizontal angle and the vertical angle of each test point, it can refer to the position marked in FIG. 4A and combine with column 2 and column 3 of FIG. 4B.

Moreover, the test lines 1 to 5 in FIG. 4A do not want the light to be sensed in principle, if the light is sensed, the sensed value can't exceed the respective maximum allowable value. For example, in column 4 of the specification sheet in FIG. 4B, the maximum luminous intensity of test lines 1 to 5 cannot exceed 130 cd, 150 cd, 245 cd, 360 cd and 485 cd in sequence, and each test line must comply with the specification in entire line.

As for the test line 6, test line 8 left, test line 8 right, test line 9 left and test line 9 right marked in FIG. 4A, ECE R149 (or R19 of the old regulations) requires that the light must be sensed on the above lines, and the sensed values must not be smaller than the respective minimum allowable value, and the specification of the test line 7 is that the sensed value of the entire test line 7 must be less than 50% of the maximum sensed value of the test line 6. It can refer to column 4 in the specification sheet in FIG. 4B, the minimum luminous intensity of test the line 6, test line 8 left, test line 8 right, test line 9 left and test line 9 right cannot be smaller than 2700 cd, 1100 cd, 1100 cd, 450 cd and 450 cd in sequence.

Furthermore, the test line 6 must comply with the specification in entire line, and the test line 8 left, test line 8 right, test line 9 left and test line 9 right respectively have more than one test point to comply with the corresponding specifications. It should be noted that since the light is not expected to be sensed on the test line 5 in principle. In other word, a transition area may be included between the test line 5 and the test line 6, that is, the cutoff line marked in FIG. 4A. As for the test zone D marked in FIG. 4A, the luminous intensity of the entire zone cannot exceed 12000 cd.

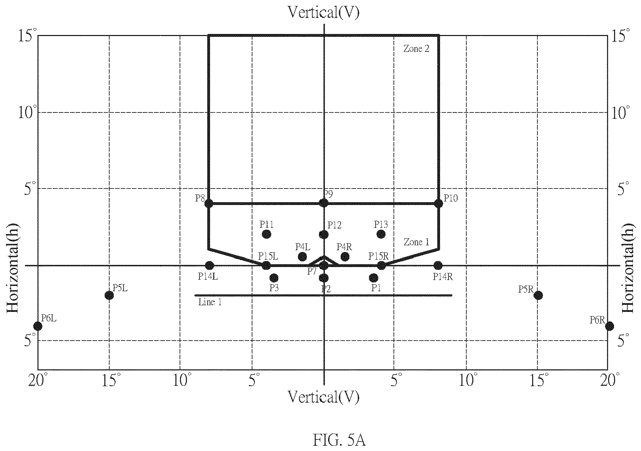

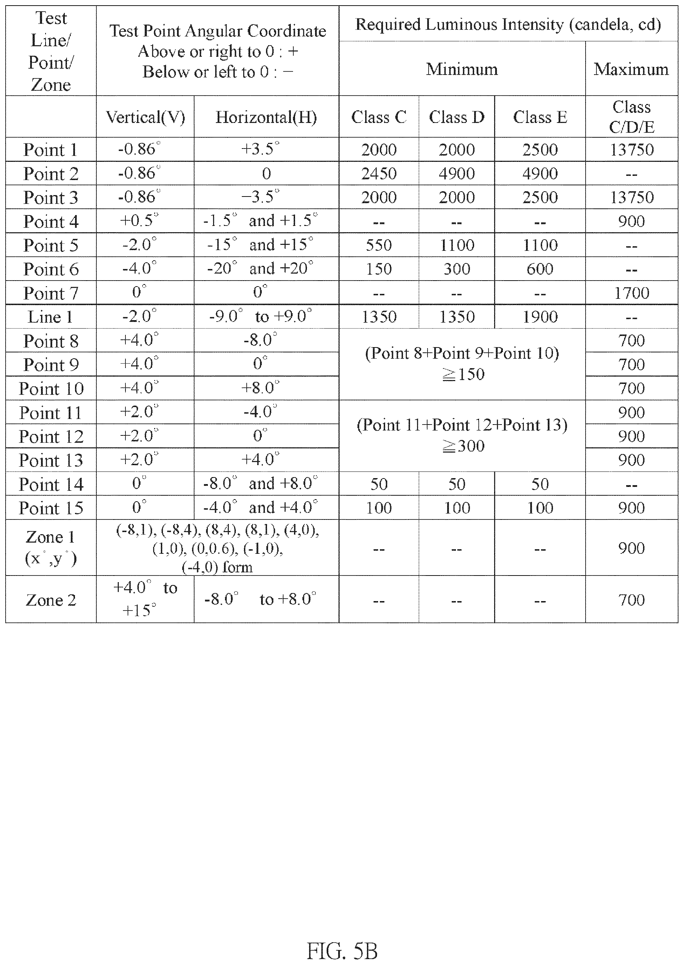

Referring to FIG. 5A and FIG. 5B, FIG. 5A is a schematic diagram of the inspection specifications of the Economic Commission for Europe on a low beam of a vehicle, and FIG. 5B is a specification sheet of the Economic Commission for Europe on a low beam of a vehicle (class D of the ECE R149 (or R113 of the old regulation)). As shown in FIG. 5A, it includes the test points 1 to 15, test line 1, test zone 1 and test zone 2, and test points 4, 5, 6, 14 and 15 respectively have left point and right point, and their corresponding horizontal position and vertical position can be combined with the column 2 and the column 3 of FIG. 5B.

The luminous intensity of the low beam 200 of the integrated vehicle lamp 10 provided by an embodiment of the present invention complies with the specifications of Economic Commission for Europe specification for class D vehicle lamp in Europe regulations. In other words, the inspection specifications of the class D of the ECE R149 (or the R113 of the old regulations) for low beam. Their corresponding luminous intensity can refer to column 5 (require its minimum value) and column 7 (require its maximum value) in FIG. 5B). It should be noted that the sum of the minimum luminous intensities of the test points 8 to 10 must be greater than 150 cd, and the sum of the minimum luminous intensities of the test points 11 to 13 must be greater than 300 cd. In addition, the test zone 1 is the irregular zone formed by nine points including the test point 8, test point 10, the positions of horizontal angle of +8 degrees and vertical angle of+1 degree, horizontal angle of +4 degrees and vertical angle of 0 degree, horizontal angle of +1 degree and vertical angle of 0 degrees, horizontal angle of 0 degrees and vertical angle of +0.6 degrees, horizontal angle of-1 degree and vertical angle of 0 degrees, horizontal angle of -4 degrees and vertical angle of 0 degrees, and horizontal angle of -8 degrees and vertical angle of +1 degrees.

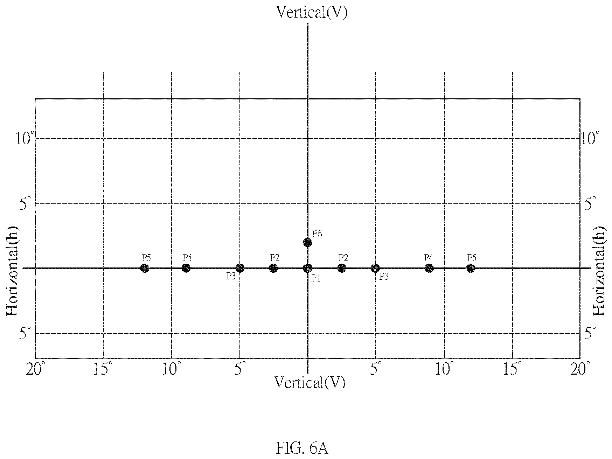

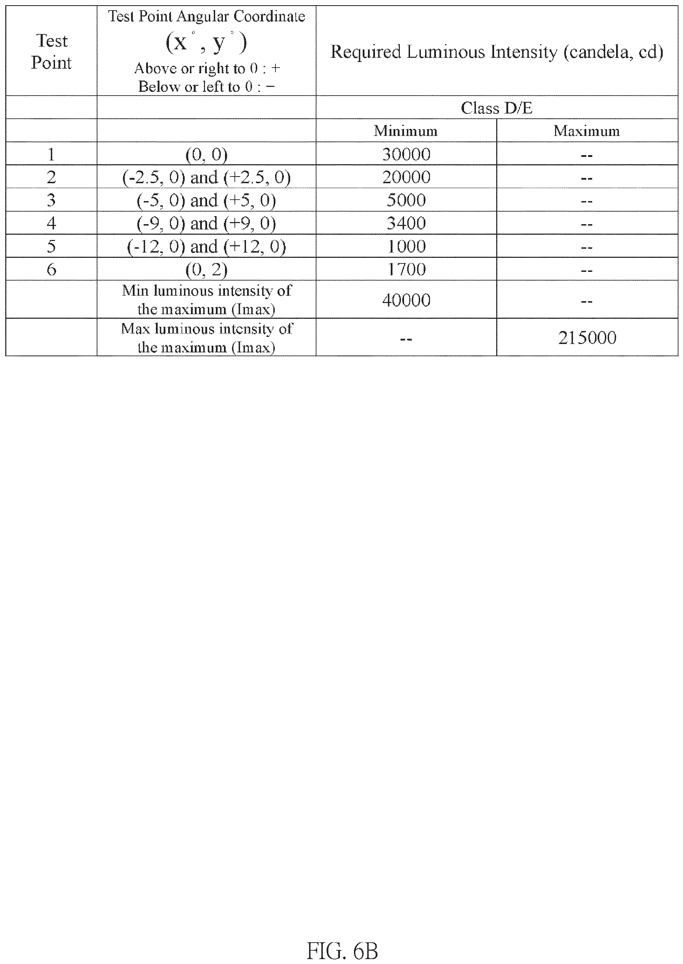

Referring to FIG. 6A and FIG. 6B, FIG. 6A is a schematic diagram of the inspection specifications of the Economic Commission for Europe on a high beam of a vehicle, and FIG. 6B is a specification sheet of the Economic Commission for Europe on a high beam of a vehicle (class D of the ECE R149 (or R19 of the old regulation)). As shown in FIG. 6A, it includes test points 1 to 6, and test points 2 to 5 respectively have left point and right point, and their corresponding horizontal position and vertical position can be combined with the column 2 of FIG. 6B.

The luminous intensity of the high beam 300 of the integrated vehicle lamp 10 provided by an embodiment of the present invention complies with the specifications of the Economic Commission for Europe for class D vehicle lamp in European Union regulations. In other words, the inspection specifications of the class D of the ECE R149 (or the R113 of the old regulations) for high beam. Their corresponding luminous intensity can refer to column 3 (require its minimum value) and column 4 (require its maximum value) in FIG. 6B). It should be noted that the maximum luminous intensity of the high beam 300 must be between 40000 cd and 215000 cd.

The integrated vehicle lamp 10 provided by an embodiment of the present invention is not only able to make the diameter not greater than eight inches in size, but also uses only one fog lamp 100, one low beam 200 and one high beam 300 to comply with the Economic Commission for Europe specifications for class D vehicle lamp in European Union regulations.

The integrated vehicle lamp 10 provided by an embodiment of the present invention not only complies with the Economic Commission for Europe for class F3 and class D vehicle lamp in the European Union regulations, but also conforms to the requirements of U.S Society of Automotive Engineers International (that is, SAE J583 technical requirements) in terms of the fog lamp. For a low beam and a high beam, it also complies with the U.S Federal Motor Vehicle Safety Standards (FMVSS 108). The relevant schematic diagrams and the specification sheets are listed below.

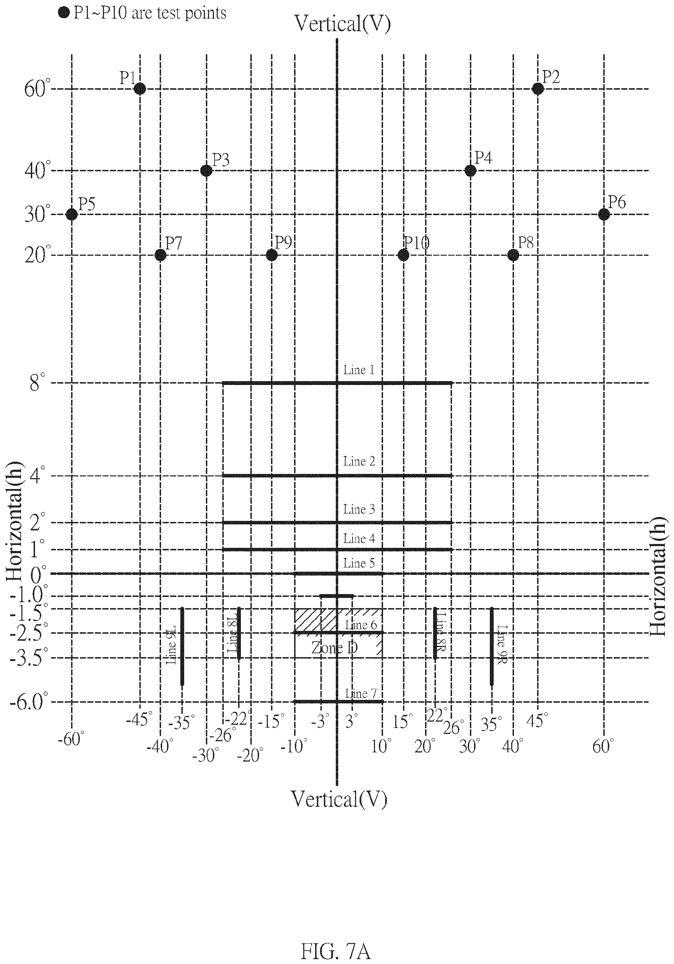

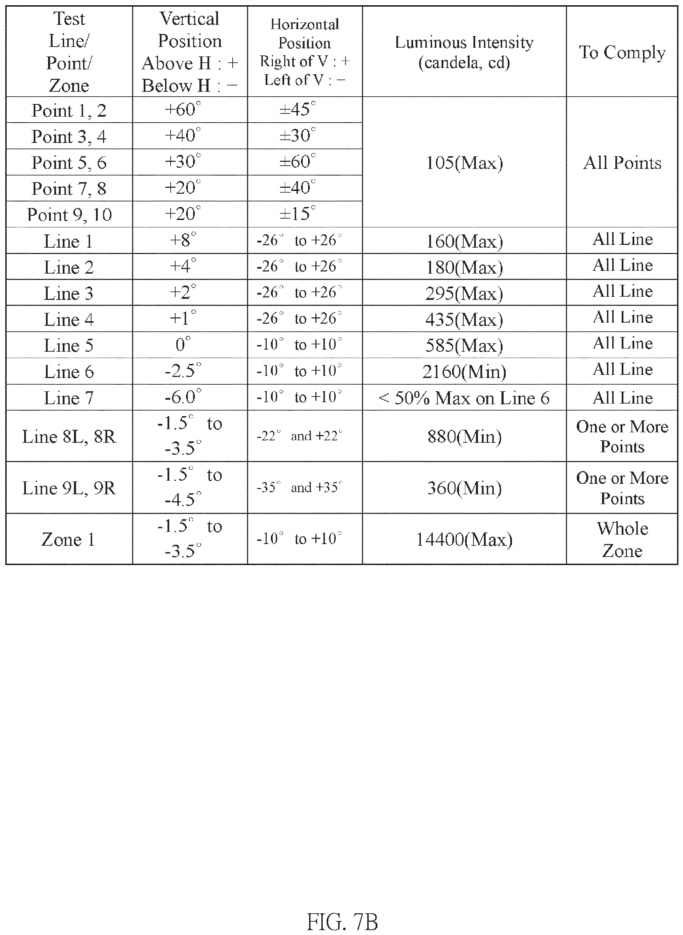

Referring to FIG. 7A and FIG. 7B, FIG. 7A is a schematic diagram of the inspection specifications of the U.S Society of Automotive Engineers International on a fog lamp, and FIG. 7B is a specification sheet of the U.S Society of Automotive Engineers International on a fog lamp (SAE J583). As shown in FIG. 7A, the inspection of the fog light 100 is basically the same as the class F3 of ECE R149, the difference is that the corresponding luminous intensity is inspected at 10 meters in front of the fog light 100. The test points 1 to 10 and the test lines 1 to 5 in FIG. 7A do not want the light to be sensed in the principle of SAE J583, if the light is sensed, the sensed value can't exceed the respective maximum allowable value.

Referring to the column 4 of the specification sheet in FIG. 7B, the maximum luminous intensity of test points 1 to 10 cannot exceed 105 cd, and all the test points must be complied. The horizontal angle and vertical angle of each test point can be referred to the position marked in FIG. 7A and combined with the column 2 and the column 3 of FIG. 7B. From column 4 of the specification sheet of FIG. 7B, the maximum luminous intensity of test lines 1 to 5 cannot exceed 160 cd, 180 cd, 295 cd, 435 cd and 585 cd in sequence, and each test line must comply the specification in entire line.

As for the test line 6, test line 8 left, test line 8 right, test line 9 left and test line 9 right marked in FIG. 7A, SAE J583 requires that the light must be sensed on the above lines, and the sensed values must not be smaller than the respective minimum allowable value, and the specification of the test line 7 is that the sensed value of the entire test line 7 must be less than 50% of the maximum sensed value of the test line 6. It can refer to column 4 in the specification sheet in FIG. 7B, the minimum luminous intensity of test the line 6, test line 8 left, test line 8 right, test line 9 left and test line 9 right cannot be smaller than 2160 cd, 880 cd, 880 cd, 360 cd and 360 cd in sequence.

Furthermore, the test line 6 must comply with the specification in entire line, and the test line 8 left, test line 8 right, test line 9 left and test line 9 right respectively have more than one test point to comply with the corresponding specifications. It should be noted that since the light is not expected to be sensed on the test line 5 in principle. In other word, a transition area may be included between the test line 5 and the test line 6, that is, the cutoff line marked in FIG. 7A. As for the test zone 1 marked in FIG. 7A, the luminous intensity of the entire zone cannot exceed 14400 cd.

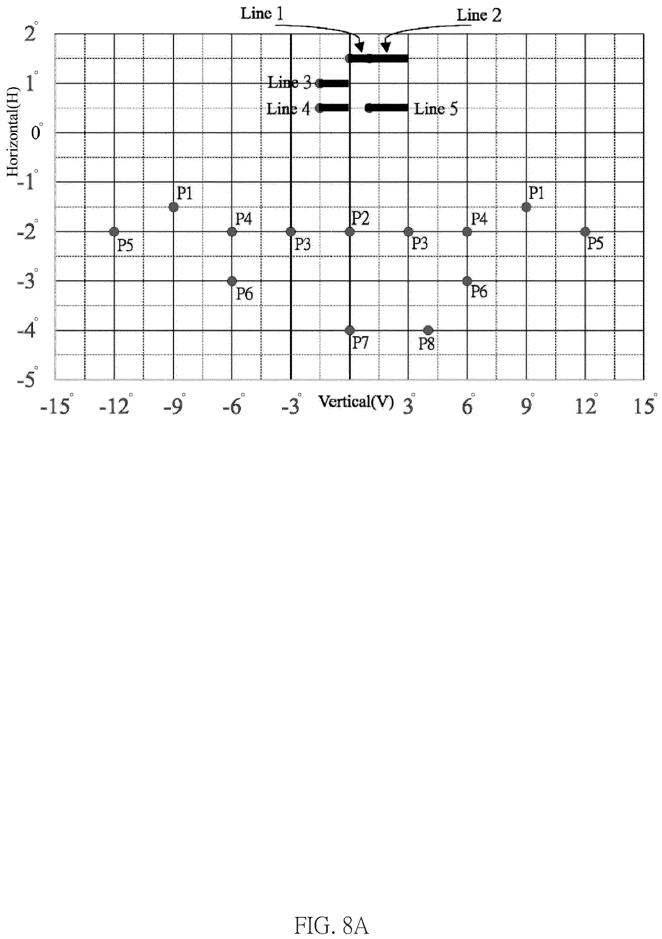

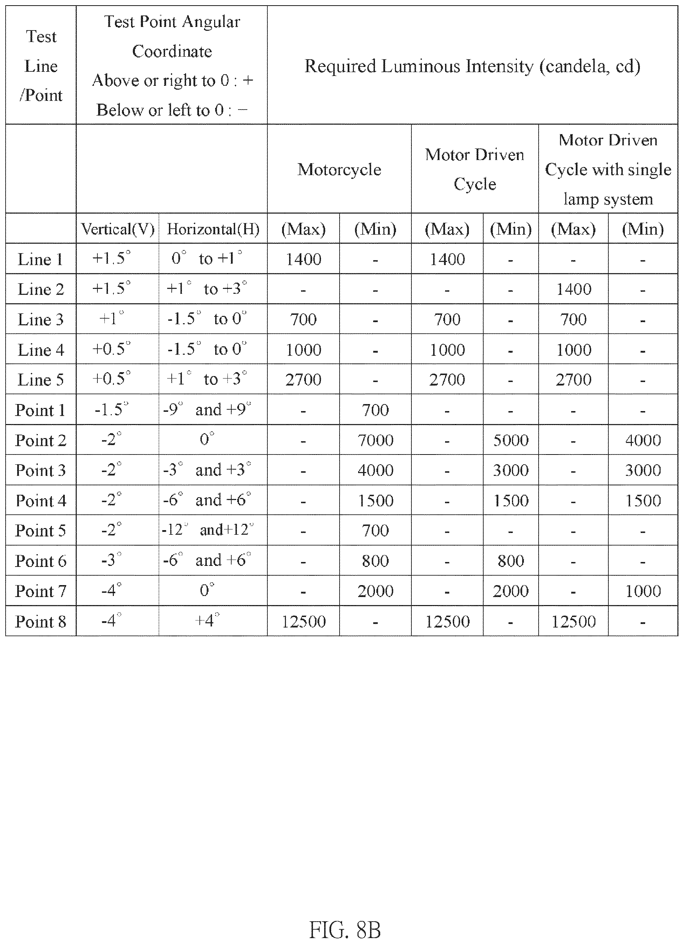

Referring to FIG. 8A and FIG. 8B, FIG. 8A is a schematic diagram of the inspection specifications of the U.S Federal Motor Vehicle Safety Standards on a low beam, and FIG. 8B is a specification sheet of the U.S Federal Motor Vehicle Safety Standards on a low beam (FMVSS 108). As shown in FIG. 8A, it includes test lines 1 to 5, test points 1 to 8, and the test point 1 and the test points 3 to 6 respectively have two points with the vertical direction as the symmetric axis, and their corresponding horizontal positions and the vertical positions can be referred to the column 2 and the column 3 of FIG. 8B.

The luminous intensity of the low beam 200 of the integrated vehicle lamp 10 provided by an embodiment of the present invention complies with the inspection specifications of FMVSS 108 for low beam. The specifications include the required maximum luminous intensity and minimum luminous intensity for a motorcycle, a motor driven cycle and a motor driven cycle with single lamp, they can be referred to the column 4 to the column 9 of FIG. 8B.

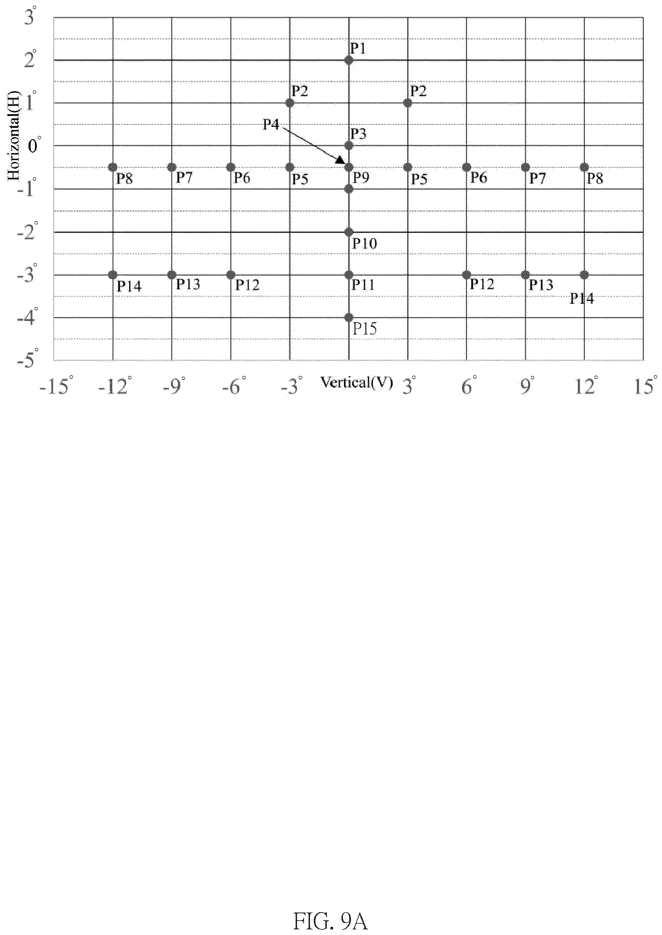

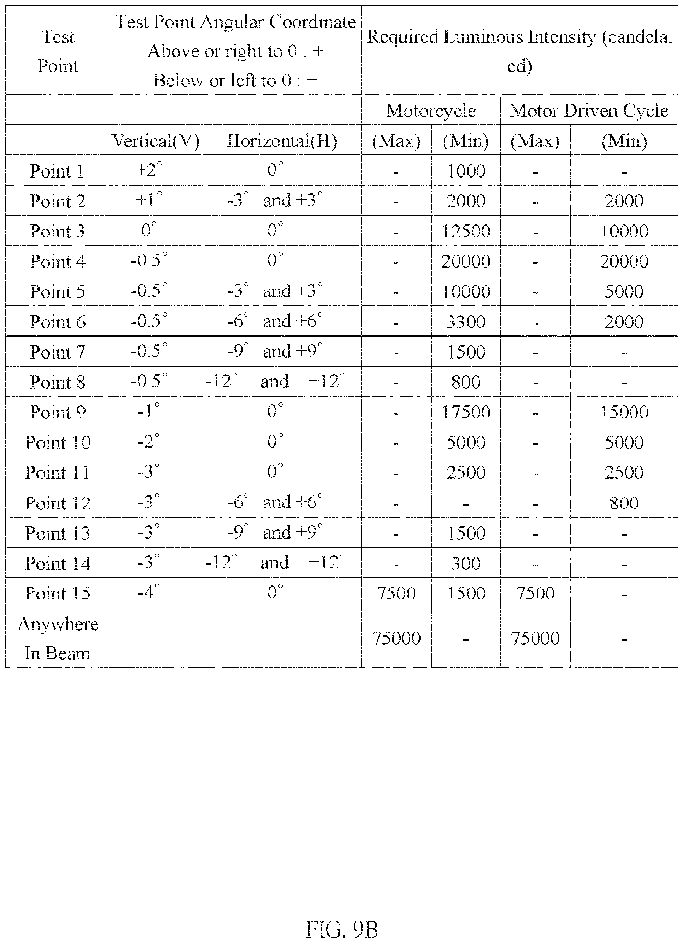

Referring to FIG. 9A and FIG. 9B, FIG. 9A is a schematic diagram of the inspection specifications of the U.S Federal Motor Vehicle Safety Standards on a high beam, and FIG. 9B is a specification sheet of the U.S Federal Motor Vehicle Safety Standards on a high beam (FMVSS 108). As shown in FIG. 9A, it includes test points 1 to 15, and the test point 2, the test points 5 to 8 and the test points 12 to 14 respectively have two points with the vertical direction as the symmetric axis, and their corresponding horizontal positions and the vertical positions can be referred to the column 2 and the column 3 of FIG. 9B.

The luminous intensity of the high beam 300 of the integrated vehicle lamp 10 provided by an embodiment of the present invention complies with the inspection specifications of FMVSS 108 for high beam. The specifications include the required maximum luminous intensity and minimum luminous intensity for a motorcycle and a motor driven cycle, they can be referred to the column 4 to the column 7 of FIG. 9B. It should be noted that the luminous intensity of the high beam in the whole zone can't exceed 75000 cd.

According to an embodiment of the present invention, in addition to carry the substrate 400 and the lens module 700, the fixed base 500 of the integrated vehicle lamp 10 can also be provided with a heat dissipating unit 600 on the side opposite to the substrate 400, so as to accelerate the discharge of the heat generated by the first light source 410, the second light source 420 and the third light source 430 on the substrate 400. For example, the heat dissipating unit 600 may have at least one heat dissipating fin 610, such as a metal sheet or the like.

Although the preferred embodiments of the invention have been described herein, the above description is merely illustrative. The preferred embodiments disclosed will not limit the scope of the present invention. Further modification of the invention herein disclosed will occur to those skilled in the respective arts and all such modifications are deemed to be within the scope of the invention as defined by the appended claims.

## Claims

1. A lens module, comprising:
a first lens having a refractive index between 1.4 and 1.6, and an average curvature of a light exit surface of the first lens is between 1/36 reciprocal millimeter ((mm)⁻¹) and 1/43 (mm)⁻¹; wherein when the first lens receives an incident light emitted by a first light source with a light exit angle within 120 degrees, the first lens has a light exit angle within 70 degrees in a horizontal direction on the light exit surface, and the first lens has a light exit angle within 5 degrees in a vertical direction on the light exit surface; wherein a size of the first lens is not greater than 50 millimeters (mm) in a minor axis direction, and a protruding height of the light exit surface of the first lens is not greater than 20 mm;
a second lens, wherein when the second lens receives an incident light emitted by a second light source, the second lens has a light exit angle within 40 degrees in a horizontal direction on a light exit surface, and the second lens has an exit angle within 5 degrees in a vertical direction on the light exit surface; and
a third lens, wherein when the third lens receives an incident light emitted by a third light source, the third lens has a light exit angle within 26 degrees in a horizontal direction on a light exit surface, and the third lens has a light exit angle within 2 degrees in a vertical direction on the light exit surface;
wherein the first lens, the second lens and the third lens are arranged vertically in a straight line in sequence, and there is a first distance between a bottom end of the first lens and a top end of the third lens, and the first distance is not greater than 200 mm.

2. The lens module of claim 1, wherein a ratio of the size of the first lens in the minor axis direction and the first distance is 15% to 20%; wherein a ratio of the protruding height of the light exit surface of the first lens and the first distance is 5% to 10%.

3. The lens module of claim 1, wherein a refractive index of the second lens is 1.4 to 1.6, and an average curvature of a light exit surface of the second lens is between 1/50 (mm)⁻¹ and 1/57 (mm)⁻¹, and a size of the second lens is not greater than 50 mm in a minor axis direction.

4. The lens module of claim 3, wherein a ratio of the size of the second lens in the minor axis direction and the first distance is 15% to 25%.

5. The lens module of claim 1, wherein a refractive index of the third lens is 1.4 to 1.6, and an average curvature of a light exit surface of the third lens is between 1/43 (mm)⁻¹ and 1/50 (mm)⁻¹, and a size of the third lens is not greater than 50 mm in a minor axis direction.

6. The lens module of claim 5, wherein a ratio of the size of the third lens in the minor axis direction and the first distance is 15% to 25%.

7. The lens module of claim 1, wherein the first light source is disposed on a light exit plane, and the light exit plane is substantial parallel to an incident plane of the first lens; wherein the second light source is disposed on a light exit plane, and the light exit plane is substantial parallel to an incident plane of the second lens; wherein the third light source is disposed on a light exit plane, and the light exit plane is substantial parallel to an incident plane of the third lens.

8. A integrated vehicle lamp, comprising:
the lens module of claim 1; and
a substrate disposed on a light incident side of the lens module, wherein the first light source, the second light source and the third light source are disposed on the substrate; wherein a light emitted from the first light source is substantially incident on the first lens, and a light emitted from the second light source is substantially incident on the second lens and a light emitted from the third light source is substantially incident on the third lens.

9. The lamp of claim 9, wherein a ratio of the distance between the substrate and the lens module and the first distance is 8% to 13%.

10. The lamp of claim 8, further comprising:
a fixed base to fix the substrate; and
a heat dissipating unit disposed on a side of the fixed base different to substrate.

11. The lamp of claim 8, wherein a size of the second lens is not greater than 60 mm in a major axis direction, and a protruding height of the light exit surface of the second lens is not greater than 20 mm.

12. The lamp of claim 11, wherein a ratio of the size of the second lens in the major axis direction and the first distance is 20% to 30%; wherein a ratio of the protruding height of the light exit surface of the second lens and the first distance is 5% to 10%.

13. The lamp of claim 8, wherein a size of the third lens is not greater than 50 mm in a major axis direction, and a protruding height of the light exit surface of the third lens is not greater than 20 mm.

14. The lamp of claim 13, wherein a ratio of the size of the third lens in the major axis direction and the first distance is 15% to 25%; wherein a ratio of the protruding height of the light exit surface of the third lens and the first distance is 5% to 10%.

15. The lamp of claim 8, wherein the first light source is disposed on a light exit plane of the substrate, and the light exit plane is substantial parallel to an incident plane of the first lens; wherein the second light source is disposed on a light exit plane of the substrate, and the light exit plane is substantial parallel to an incident plane of the second lens; wherein the third light source is disposed on a light exit plane of the substrate, and the light exit plane is substantial parallel to an incident plane of the third lens.
